# EUROPÄISCHE PATENTSCHRIFT

(11) **EP 2 649 677 B1**
(45) Veröffentlichungstag und Bekanntmachung des Hinweises auf die Patenterteilung: **21.12.2016**
(21) Anmeldenummer: 11807856.7
(22) Anmeldetag: 17.11.2011
(51) Int. Cl.: H01Q 1/42, H01Q 7/00, H01Q 13/10, G06K 19/077, H01Q 1/22, H04B 5/00

(54) **RFID-TRANSPONDER**
RFID TRANSPONDER
TRANSPONDEUR RFID

(30) Priorität: 07.12.2010 DE 202010013072 U
(43) Veröffentlichungstag der Anmeldung: 16.10.2013
(73) Patentinhaber: Harting IT Software Development GmbH & Co. KG, 32339 Espelkamp (DE)
(72) Erfinder: HEHLGANS, Jörg, 31199 Diekholzen (DE)
(86) Internationale Anmeldenummer: PCT/DE2011/075275
(87) Internationale Veröffentlichungsnummer: WO 2012/092922

(56) Entgegenhaltungen:
- EP-A1- 2 214 255
- EP-A1- 2 228 756
- DE-U1-202008 001 549

## Beschreibung

Die Erfindung betrifft einen RFID-Transponder nach dem Oberbegriff des unabhängigen Anspruchs 1.

Radio Frequency Identification (RFID)-Transponder werden für die verschiedensten Anwendungen eingesetzt, insbesondere zum elektronischen Identifizieren von Gegenständen. Im RFID-Transponder kann beispielsweise eine Identifikationsnummer für den entsprechenden Gegenstand gespeichert sein. Mittels eines Lesegeräts kann diese Identifikationsnummer ausgelesen werden. Das Problem dabei ist, dass passive RFID-Transponder sich sehr nahe am Lesegerät befinden müssen, damit ein Auslesen möglich ist.

### Stand der Technik

Die Druckschrift DE 20 2008 001 549 U1 schlägt dementsprechend einen RFID-Transponder vor, der zum einen über große Entfernungen ausgelesen werden kann (bei einem UHF-Frequenzbereich von 860 bis 950 MHz), insbesondere über Entfernungen von mehr als 1 m, und zum anderen sehr unempfindlich ist gegenüber Umwelteinflüssen.

Anspruch 1 ist gegenüber diesem Dokument abgegrenzt.

In dieser Druckschrift wird dazu eine Vorrichtung mit folgenden Merkmalen offenbart: Ein RFID-Transponder mit einem Gehäuse und einer Koppelschleife, die elektrisch mit einem im Gehäuse angeordneten RFID-Chip verbunden ist, und einer Antenne, die einen Schlitz aufweist und an der Außenseite des Gehäuses angeordnet ist. Die extern angeordnete Antenne vergrößert die Entfernung, über die der RFID-Transponder mit einem Lesegerät ausgelesen werden kann. Für den Schlitz können verschiedene geometrische Gestaltungen verwendet werden. Weiterhin wird offenbart, das Gehäuse üblicherweise so anzuordnen, dass es sich von der einen Seite des Schlitzes zur anderen erstreckt. Diese Variante hat sich in der Praxis auch als besonders vorteilhaft für die Reichweite des RFID-Transponders erwiesen, weil es dadurch möglich ist, die Koppelschleife sehr nah an dem Schlitz, nämlich direkt über dem Schlitz, anzuordnen.

Leider hat sich gezeigt, dass dieser Stand der Technik nicht immer ausreichend ist, um das Gehäuse vor mechanischen Spannungen zu schützen. Solche Spannungen können dadurch entstehen, dass sich die Antenne, welche aus einem flächigen Metallstück besteht, im Bereich des Schlitzes besonders stark verformt, wenn sie ihrerseits mechanischen Spannungen ausgesetzt ist. Insbesondere ändert sich bei Einwirkung mechanischer Spannungen, welche rechtwinklig zum Schlitz verlaufen, die Ausrichtung eines ersten Antennenteils gegenüber einem zweiten Antennenteil, wobei das erste Antennenteil und das zweite Antennenteil sich dadurch unterscheiden, dass sie zumindest in einem Bereich der Antenne durch den Schlitz getrennt sind.

### Aufgabenstellung

Der Erfindung liegt daher die Aufgabe zugrunde, ein Gehäuse eines RFID-Transponders der Eingangs erwähnten Art vor mechanischen Spannungen zu bewahren oder mechanischen Spannungen, die auf ihn wirken, zumindest so stark zu reduzieren, dass eine Beschädigung des Gehäuses und der darin angeordneten Komponenten verhindert wird.

Diese Aufgabe wird mit einem RFID-Transponder der eingangs erwähnten Art durch die Merkmale des kennzeichnenden Teils des unabhängigen Anspruchs 1 gelöst.

Dabei bedeutet das Kennzeichen "wobei das zweite Gehäuseteil zumindest bereichsweise über dem zweiten Antennenteil angeordnet ist", dass zumindest ein Bereich des zweiten Gehäuseteils über zumindest einem Bereich des zweiten Antennenteils angeordnet ist.

Insbesondere ist die Höhe des zweiten Gehäuseteils um vorteilhafterweise mindestens 0,8 Millimeter (mm), bevorzugt mindestens 1mm, besonders bevorzugt mindestens 1,5 mm, und sehr besonders bevorzugt mindestens 2 mm geringer als die Höhe des ersten Gehäuseteils.

Vorteilhafte Ausgestaltungen der Erfindung sind in den Ansprüchen 2 - 13 angegeben.

Bei der Erfindung handelt es sich um eine Vorrichtung, die geeignet ist, sicherzustellen, dass ein Gehäuse, das über einem Schlitz einer flächigen Antenne angeordnet ist, durch eine mögliche Verformung der Antenne keinen oder nur geringfügigen mechanischen Spannungen ausgesetzt ist.

Wenn sich die Antenne, beispielsweise unter Einwirkung rechtwinklig zum Schlitz verlaufender mechanischer Spannungen verformt, dann werden dadurch am Gehäuse keine mechanischen Spannungen erzeugt, weil das Gehäuse nur mit seinem ersten Gehäuseteil am ersten Antennenteil befestigt ist. Insbesondere gilt dies auch, wenn die Antenne zum Gehäuse hingebogen wird, weil durch die Stufe zwischen dem zweiten Gehäuseteil und dem zweiten Antennenteil ein Spalt existiert, so dass das zweite Antennenteil das zweite Gehäuseteil auch in diesem Fall nicht berührt.

Die Antenne vergrößert weiterhin die Entfernung, über die der RFID-Transponder mit einem Lesegerät ausgelesen werden kann. Die Antenne muss auch nicht elektrisch mit dem RFID-Chip im Gehäuse verbunden sein, sondern wird von der Koppelschleife angeregt. Auf diese Weise ergibt sich eine hohe Robustheit. Das Gehäuse ist insbesondere so ausgeführt, dass der darin angeordnete RFID-Chip weder durch Umwelteinflüsse beschädigt wird noch durch hohe Temperaturen und Chemikalien, wie sie bei verschiedenen industriellen Reinigungsprozessen auftreten bzw. verwendet werden. Dies ermöglicht beispielsweise, den RFID-Transponder an Bierfässern anzubringen, um diese berührungslos und über größere Entfernungen identifizieren zu können. Bei der Reinigung der Bierfässer wird der RFID-Transponder nicht beschädigt. Wird ein solcher RFID-Transponder auf ein Bierfass montiert, das kleiner ist als es für den RFID-Transponder vorgesehen, mit andern Worten, das einen geringeren Krümmungsradius besitzt als vorgesehen, dann wird zwar die Antenne mechanischen Spannungen ausgesetzt. Das Gehäuse und die darin befindlichen Bauteile, insbesondere der RFID-Chip und die Koppelschleife, bleiben aber von diesen mechanischen Spannungen verschont.

In einer bevorzugten Ausführungsform weist das erste Gehäuseteil mindestens eine, bevorzugt zwei Befestigungslaschen auf, welche zu seiner Höhe beitragen. Das zweite Gehäuseteil weist somit eine um mindestens 0,5 mm, vorteilhafterweise mindestens 0,8 mm, bevorzugt mindestens 1mm , besonders bevorzugt mindestens 1,5 mm, sehr besonders bevorzugt mindestens 2 mm geringere Höhe auf als das erste Gehäuseteil. Dadurch besitzt das Gehäuse an einer zur Antenne gerichteten Außenseite mindestens eine, bevorzugt zwei am Rande der Befestigungslaschen befindliche, mindestens 0,5 mm, vorteilhafterweise mindestens 0,8 mm, bevorzugt mindestens 1 mm , besonders bevorzugt mindestens 1,5 mm, und sehr besonders bevorzugt mindestens 2 mm hohe Stufen, und es verbleibt zwischen dem zweiten Antennenteil und dem zweiten Gehäuseteil der entsprechende Spalt.

In einer weiteren bevorzugten Ausführungsform besitzen die Befestigungslaschen Befestigungsösen.

Beispielsweise kann das erste Gehäuseteil mit der Antenne durch die Befestigungsösen mit Befestigungsmitteln wie Schrauben, Passstiften, Nieten, oder Spreizdornen befestigt werden. Weiterhin sind auch Ausgestaltungen des Gehäuses und der Antenne denkbar, die Rastverbindungen zwischen dem ersten Gehäuseteil und dem ersten Antennenteil vorsehen.

Die Antenne besteht vorzugsweise aus einem flächigen Metallstück und kann aus Metallblech bestehen.

Der Schlitz ist vorteilhafterweise mit seiner Länge so an die vom RFID-Chip verwendete Wellenlänge λ angepasst, dass die Schlitzlänge-bevorzugt die Hälfte der Wellenlänge λ, also λ/2, oder aber auch ein anderes ganzzahliges Vielfaches von λ/2, also beispielsweise 2/2 λ, 3/2 λ, 4/2 λ, 5/2 λ,... etc., beträgt.

Der RFID-Transponder sendet und empfängt insbesondere im Frequenzbereich von 860 bis 960 MHz. Die Wellenlänge λ liegt dementsprechend zwischen 31 cm und 35 cm.

Das Gehäuse, welches den RFID-Chip beinhaltet, kann dabei zentral über dem Schlitz angeordnet sein. Dies ermöglicht eine besonders hohe Reichweite. Die Position des Gehäuses kann davon auch geringfügig abweichen, beispielsweise um bestimmte Anpassungen an die Antenne zu realisieren.

Für den Schlitz können verschiedene geometrische Gestaltungen verwendet werden, beispielsweise linienförmig, gekrümmt oder gegabelt. Solche Gestaltungen sind von sogenannten Schlitzstrahlern bekannt. Je nach konkretem Anwendungsfall und den sich daraus ergeben den Anforderungen kann die geeignete Form des Schlitzes ausgewählt werden.

Gemäß einer bevorzugten Ausführungsform ist die Antenne mit Befestigungsmitteln versehen, mittels derer der RFID-Transponder an einem Gegenstand befestigt werden kann. Insbesondere kann vorgesehen sein, dass die Befestigungsmittel als abgebogener Befestigungsabschnitt ausgeführt sind. Diese Ausführungsform macht sich die Festigkeit des Metallstücks zunutze, aus dem die Antenne gebildet ist.

Somit kann die Antenne direkt an beispielsweise einem Bierfass, einer Gasflasche oder einem zu bearbeitenden Werkstück angebracht werden. Dies kann durch Verpressen, Verschrauben, Aufklipsen, etc. erfolgen.

Das Gehäuse kann aus einem mechanisch, chemisch, thermisch und witterungstechnisch beständigen Material bestehen, beispielsweise Vectra LCP 840i LDS.

Der RFID-Chip kann im Gehäuse vergossen sein.

Der RFID-Chip kann zusammen mit der Koppelschleife auf einer Leiterplatte als Einheit zusammengefasst sein.

Das Gehäuse kann mittels eines Deckels verschlossen sein, wobei der Deckel durch Ultraschallschweißen mit dem Gehäuse verbunden ist.

### Ausführungsbeispiel

Ein Ausführungsbeispiel der Erfindung ist in der Zeichnung dargestellt und wird im Folgenden näher erläutert. Es zeigen:
- Fig. 1a: ein Gehäuse in einer schrägen Draufsicht;
- Fig. 1b: das Gehäuse in einer Draufsicht;
- Fig. 2: das Gehäuse in einer Seitenansicht;
- Fig. 3: das Gehäuse in einer Rückansicht;
- Fig. 4a: ein RFID-Transponder mit dem Gehäuse und einer Antenne in der Draufsicht;
- Fig. 4b: ein RFID-Transponder mit dem Gehäuse und der Antenne in einer Seitenansicht; und
- Fig. 5: verschiedene Ausführungen von Antennen.

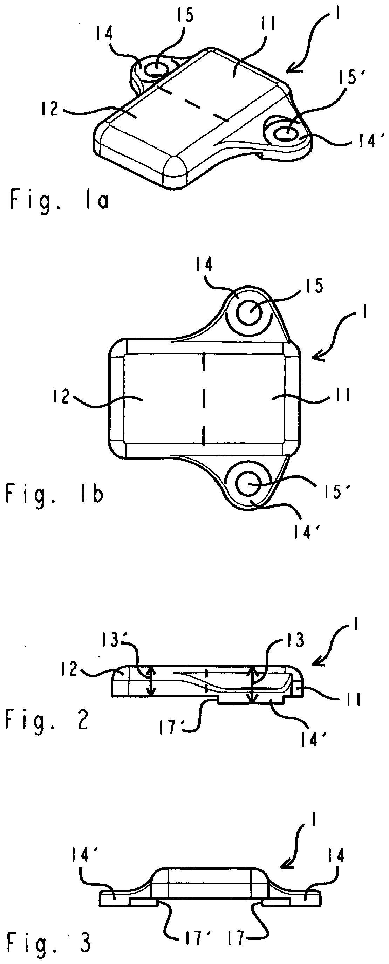

In der Fig. 1a ist ein Gehäuse 1 in einer schrägen Draufsicht und in der Fig. 1b in einer Draufsicht dargestellt. Dieses Gehäuse 1 besteht aus einem ersten Gehäuseteil 11 und einem zweiten Gehäuseteil 12. Am ersten Gehäuseteil 11 sind zwei Befestigungslaschen 14,14' mit dazugehörigen Befestigungs-ösen 15,15' angeformt. Diese beiden Befestigungslaschen 14,14' gehören zum ersten Gehäuseteil 11.

In der Fig. 2 ist das Gehäuse 1 in einer Seitenansicht dargestellt. Daraus wird ersichtlich, dass die Höhe 13 des ersten Gehäuseteils 11 größer ist als die Höhe 13' des zweiten Gehäuseteils 12. Dabei tragen die beiden Befestigungslaschen 14,14' zur Höhe 13 des ersten Gehäuseteils 11 bei.

In der Fig. 3 ist das Gehäuse in einer Rückansicht dargestellt. Aus dieser Darstellung wird ersichtlich, dass das Gehäuse 1 an einer Außenseite zwei Stufen 17,17' aufweist, wobei die beiden Stufen 17,17' am Rande der dazugehörigen Bestigungslaschen 14,14' angeordnet sind.

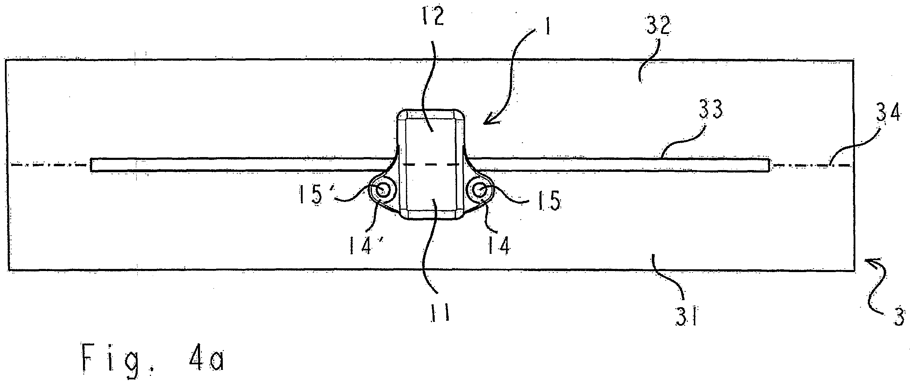

In der Fig. 4a ist ein RFID-Transponder mit einem dazugehörigen Gehäuse 1 und einer Antenne 3, in einer Draufsicht dargestellt. Die Antenne 3 besteht aus einem gestanzten Metallblech, umfasst ein erstes Antennenteil 31 und eine zweites Antennenteil 32 und weist weiterhin einen Schlitz 33 auf.

Die beiden Antennenteile 31,32 werden durch eine Symmetrieachse 34 des Schlitzes 33 voneinander getrennt. Aus dieser Darstellung wird ersichtlich, dass das Gehäuse 1 ausschließlich mit seinem ersten Gehäuseteil 11 durch seine Befestigungslaschen 14, 14' an dem ersten Antennenteil 31 befestigt ist. Gleichzeitig ist das Gehäuse 1 bereichsweise über dem Schlitz 33 angeordnet, was bedeutet, dass sich zumindest ein Bereich des Gehäuses 1 über zumindest einem Bereich des Schlitzes 33 angeordnet ist. Das Gehäuse 1 erstreckt sich von der einen Seite des Schlitzes 33 zu der anderen.

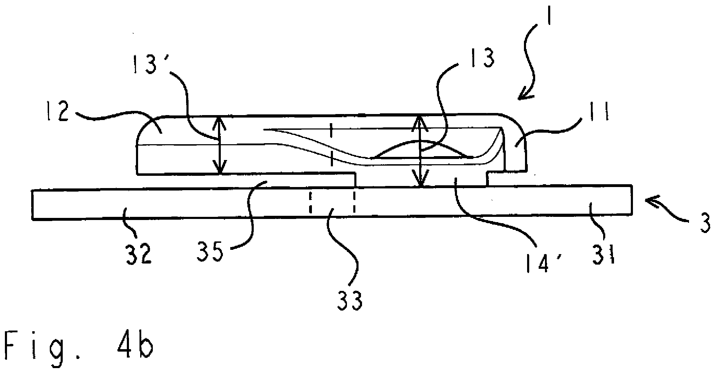

In der Fig. 4b ist der RFID-Transponder mit einem dazugehörigen Gehäuse 1 und einer Antenne 3 in einer Seitenansicht dargestellt. Zwischen dem zweiten Antennenteil 32 und dem zweiten Gehäuseteil 12 verbleibt ein Spalt 35.

Der Spalt 35 besitzt eine Breite, die der Höhendifferenz der beiden Gehäuseteile 11,12 entspricht und somit mindestens 0,5 mm, vorteilhafterweise mindestens 0,8 mm, bevorzugt mindestens 1mm , besonders bevorzugt mindestens 1,5 mm, und sehr besonders bevorzugt mindestens 2 mm beträgt.

Weiterhin wird auch der Zeichnung leicht ersichtlich, dass das zweite Antennenteil 32, auch wenn es zum zweiten Gehäuseteil 12 hingebogen wird, durch den Spalt 35 das zweite Gehäuseteil 12 nicht berührt.

Die Befestigung findet mittels zweier Schrauben statt. In weiteren Ausführungen sind als Befestigungseinrichtungen auch Passstifte, Nieten, Spreizdorne oder Rastverbindungen sowie Kombinationen aus diesen möglich.

Das Gehäuse 1 enthält im Inneren einen RFID-Chip, der dort vor Umwelteinflüssen geschützt aufgenommen ist. Der RFID-Chip kann im Inneren des Gehäuses 1 vergossen oder auf andere Weise eingeschlossen sein. Beispielsweise kann das Gehäuse 1 aus zwei Teilen bestehen, die durch Ultraschallschweißen miteinander fest verbunden sind. Das Gehäuse 10 besteht aus einem mechanisch, chemisch, thermisch und witterungstechnisch beständigen Material, beispielsweise aus Vectra LCP 840i LDS. Im Gehäuse 1 ist zentral eine Koppelschleife angeordnet. Die Koppelschleife ist elektrisch mit dem RFID-Chip im Inneren des Gehäuses 1 verbunden. Der RFID-Chip und die Koppelschleife können auf einer gemeinsamen Leiterplatte angeordnet sein. Dabei kann die Koppelschleife durch eine Leiterbahn gebildet sein.

Der RFID-Transponder sendet und empfängt insbesondere im Frequenzbereich von 860 bis 960 MHz. Die Wellenlänge λ liegt dementsprechend zwischen 31 cm und 35 cm.

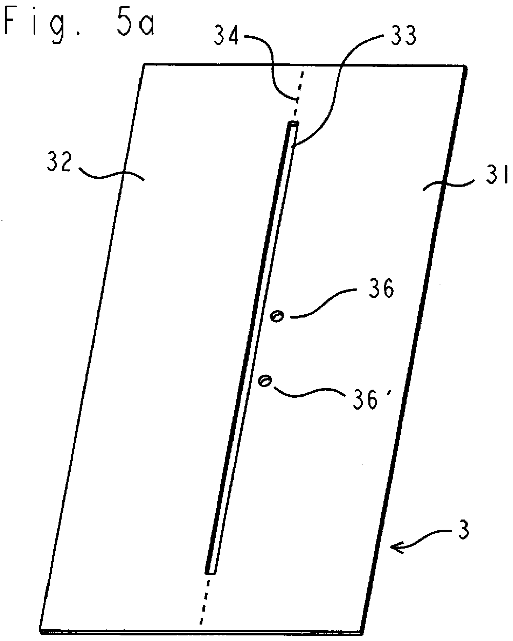

In den Fig. 5a bis e sind verschiedene Bauformen der Antenne 3 prinzipiell dargestellt. Auf jeder der dargestellten Antennen 3 sind jeweils zwei Bohrungen 36,36' angeordnet. Dabei sind beide Bohrungen 36,36' ausschließlich auf einer Seite des Schlitzes 33, nämlich auf dem ersten Antennenteil 31, angeordnet. Das zweite Antennenteil 32 weist dagegen keine entsprechenden Bohrungen auf.

In der Fig. 5a ist eine Antennenbauform dargestellt, bei welcher der Schlitz 33 geradlinig verläuft und seine Länge λ/2 beträgt.

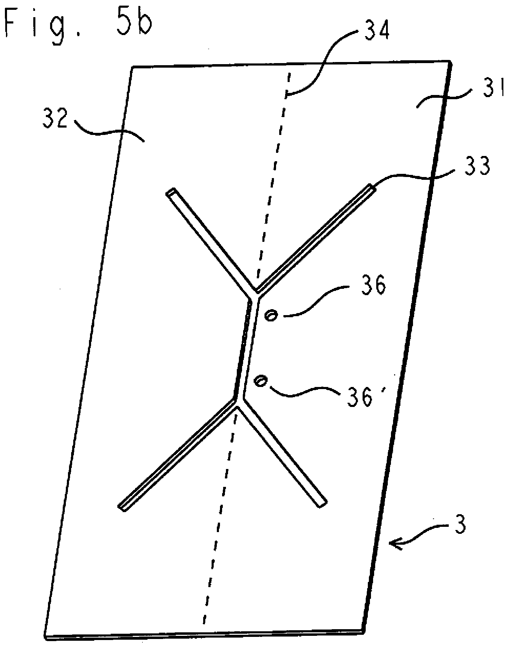

In der Fig. 5b ist eine Bauform beschrieben, bei der die Länge sämtlicher möglicher Wege, entlang derer die Welle das Gehäuse 1 kreuzt, λ/2 betragen.

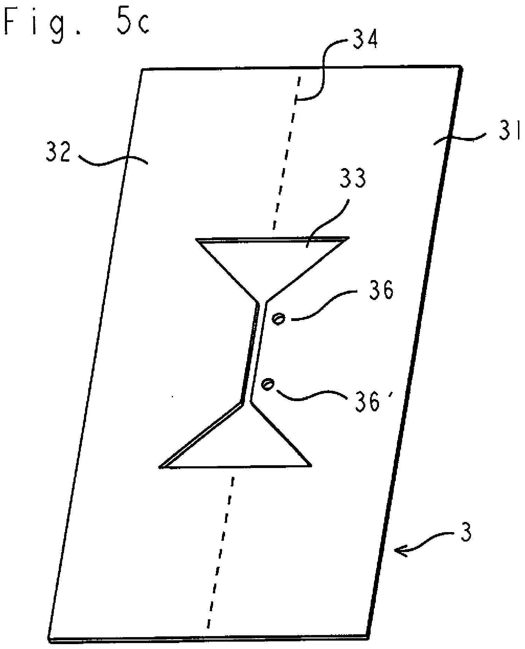

In der Fig. 5c ist für den Schlitz 33 eine klassische Sanduhr-Form, auch bekannt als Stundenglas (engl. hourglas) - Form, vorgesehen.

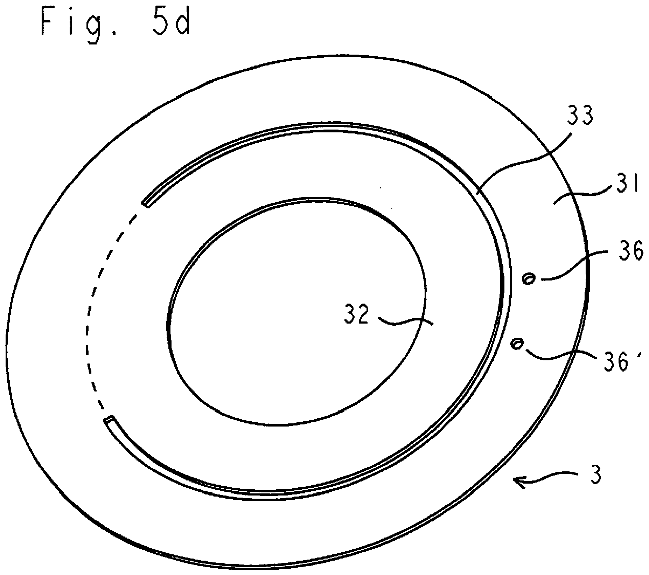

In Fig. 5d beträgt die Schlitzlänge das doppelte von λ/2, also λ.

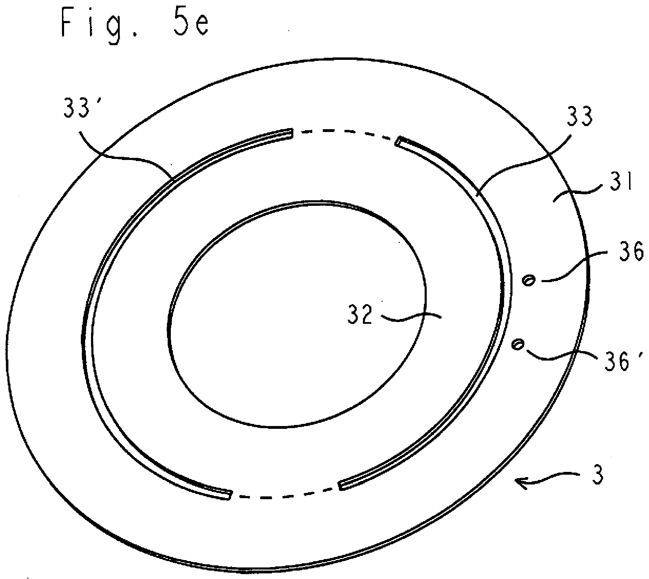

In der Fig. 5e ist zusätzlich zum Schlitz 33, welcher die Länge λ/2 aufweist, ein zweiter Schlitz 33' hinzugefügt, der ebenfalls die Länge λ/2 aufweist. Dieser zweite Schlitz 33' erfüllt die Funktion eines Resonators.

In den Fig. 5a bis 5c ist die Symmetrieachse 34 des Schlitzes 33 durch eine gestrichelte Linie dargestellt. In den Fig. 5d und 5e werden durch die gestrichelte Linie die kreissegmentförmigen Schlitze 33,33' fortgesetzt. Die gestrichelte Line trennt dabei das erste Antennenteil 31 vom zweiten Antennenteil 32.

### Bezugszeichenliste

- RFID-: Transponder
- Az.:: 211-03 WO P H

- 1: Gehäuse
- 11: erstes Gehäuseteil
- 12: zweites Gehäuseteil
- 13: Höhe des ersten Gehäuseteils
- 13': Höhe des zweiten Gehäuseteils
- 14,14': Befestigungslaschen
- 15,15': Befestigungsösen
- 17,17': Stufen

- 3: Antenne
- 31: erstes Antennenteil
- 32: zweites Antennenteil
- 33,33': Schlitz
- 34: Symmetrieachse
- 35: Spalt
- 36,36': Bohrungen

## Patentansprüche

1. RFID-Transponder mit einem Gehäuse (1), einer darin angeordneten Koppelschleife, die elektrisch mit einem im Gehäuse (1) angeordneten RFID-Chip verbunden ist, und einer Antenne (3), die aus einem flächigen Metallstück besteht und einen Schlitz (33) aufweist und an einer Außenseite des Gehäuses (1) angeordnet ist, wobei das Gehäuse (1) zumindest bereichsweise über dem Schlitz (33) angeordnet ist, **dadurch gekennzeichnet,**
**dass** die Antenne (3) einen ersten Antennenteil (31) und einen zweiten Antennenteil (32) umfasst, die voneinander zumindest in einem Bereich der Antenne (3) durch den Schlitz (33) getrennt sind, und wobei das Gehäuse (1) aus einem ersten Gehäuseteil (11) und einem zweiten Gehäuseteil (12) besteht, wobei das zweite Gehäuseteil (12) zumindest teilweise über dem zweiten Antennenteil (32) angeordnet ist und wobei das Gehäuse (1) ausschließlich mit dem ersten Gehäuseteil (11) an dem ersten Antennenteil (31) befestigt ist, und wobei das Gehäuse (1) an der zur Antenne (3) gerichteten Außenseite mindestens eine Stufe (17) aufweist, wodurch die Höhe (13') des zweiten Gehäuseteils (12) um mindestens 0,5 Millimeter geringer ist als die Höhe (13) des ersten Gehäuseteils (11), wodurch zwischen dem zweiten Antennenteil (32) und dem zweiten Gehäuseteil (12) ein Spalt (35) verbleibt, wobei der Spalt (35) eine Breite besitzt, die der Höhendifferenz der beiden Gehäuseteile (11,12) entspricht und somit mindestens 0,5 mm beträgt.

2. RFID-Transponder nach Anspruch 1, **dadurch gekennzeichnet, dass** das erste Gehäuseteil (11) mindestens eine, bevorzugt zwei Befestigungslaschen (14,14') umfasst, die zu seiner Höhe (13) beitragen.

3. RFID-Transponder nach Anspruch 2, **dadurch gekennzeichnet, dass** das Gehäuse zwei Stufen (17,17') aufweist, von denen sich jeweils eine am Rand jeweils einer Befestigungslasche (14,14') befindet.

4. RFID-Transponder nach einem der Ansprüche 2 bis 3, **dadurch gekennzeichnet, dass** jede Befestigungslasche (14,14') eine Befestigungsöse (15,15') aufweist.

5. RFID-Transponder nach einem der vorhergehenden Ansprüche, **dadurch gekennzeichnet, dass** das erste Gehäuseteil (11) mit der Antenne (3) durch mindestens ein, bevorzugt zwei Befestigungsmittel verbunden ist.

6. RFID-Transponder nach einem der vorhergehenden Ansprüche, **dadurch gekennzeichnet, dass** es sich bei den Befestigungsmitteln um Schrauben, Passstifte, Nieten, Spreizdorne oder Rastverbindungen handelt.

7. RFID-Transponder nach einem der vorhergehenden Ansprüche, **dadurch gekennzeichnet, dass** die Antenne (3) aus Metallblech besteht.

8. RFID-Transponder nach einem der vorhergehenden Ansprüche, **dadurch gekennzeichnet, dass** der Schlitz (33) der Antenne (3) eine Länge von λ/2 hat, wobei λ Werte zwischen 31 cm und 35 cm annimmt.

9. RFID-Transponder nach einem der vorhergehenden Ansprüche, **dadurch gekennzeichnet, dass** der Schlitz (33) gekrümmt oder gegabelt ausgeführt ist.

10. RFID-Transponder nach einem der vorhergehenden Ansprüche, **dadurch gekennzeichnet, dass** das Gehäuse (1) aus einem mechanisch, chemisch, thermisch und witterungstechnisch beständigen Material besteht, beispielsweise Vectra LCP 840i LDS.

11. RFID-Transponder nach einem der vorhergehenden Ansprüche, **dadurch gekennzeichnet, dass** der RFID-Chip im Gehäuse (1) vergossen ist.

12. RFID-Transponder nach einem der vorhergehenden Ansprüche. **dadurch gekennzeichnet, dass** der RFID-Chip zusammen mit der Koppelschleife auf einer Leiterplatte als Einheit zusammengefasst ist.

13. RFID-Transponder nach einem der vorhergehenden Ansprüche, **dadurch gekennzeichnet, dass** das Gehäuse (1) mittels eines Deckels verschlossen ist, der durch Ultraschallschweißen mit dem Gehäuse (1) verbunden ist.

## Claims

1. RFID transponder having a housing (1), having a coupling loop which is arranged in the said housing and is electrically connected to an RFID chip which is arranged in the housing (1), and having an antenna (3) which consists of a flat metal piece and has a slot (33) and is arranged on an outer face of the housing (1), wherein the housing (1) is arranged above the slot (33) at least in regions,
**characterized**
**in that** the antenna (3) comprises a first antenna part (31) and a second antenna part (32) which are separated from one another by the slot (33) at least in one region of the antenna (3), and wherein the housing (1) consists of a first housing part (11) and a second housing part (12), wherein the second housing part (12) is at least partially arranged above the second antenna part (32), and wherein the housing (1) is fastened to the first antenna part (31) exclusively by way of the first housing part (11), and wherein the housing (1) has at least one step (17) on the outer face which is directed towards the antenna (3), as a result of which the height (13') of the second housing part (12) is at least 0.5 millimetre lower than the height (13) of the first housing part (11), as a result of which a gap (35) remains between the second antenna part (32) and the second housing part (12), wherein the gap (35) has a width which corresponds to the height difference between the two housing parts (11, 12) and therefore has a value of at least 0.5 mm.

2. RFID transponder according to Claim 1,
**characterized in that** the first housing part (11) comprises at least one, preferably two, fastening lugs (14, 14') which contribute to its height (13).

3. RFID transponder according to Claim 2,
**characterized in that** the housing has two steps (17, 17'), each of which is located at the edge of a respective fastening lug (14, 14').

4. RFID transponder according to either of Claims 2 and 3, **characterized in that** each fastening lug (14, 14') has a fastening eyelet (15, 15').

5. RFID transponder according to one of the preceding claims, **characterized in that** the first housing part (11) is connected to the antenna (3) by at least one, preferably two, fastening means.

6. RFID transponder according to one of the preceding claims, **characterized in that** the fastening means are screws, locating pins, rivets, expanding mandrels or latching connections.

7. RFID transponder according to one of the preceding claims, **characterized in that** the antenna (3) is composed of sheet metal.

8. RFID transponder according to one of the preceding claims, **characterized in that** the slot (33) in the antenna (3) has a length of λ/2, where λ assumes values of between 31 cm and 35 cm.

9. RFID transponder according to one of the preceding claims, **characterized in that** the slot (33) is designed in a curved or forked manner.

10. RFID transponder according to one of the preceding claims, **characterized in that** the housing (1) is composed of a mechanically, chemically and thermally stable and weather-resistant material, for example Vectra LCP 840i LDS.

11. RFID transponder according to one of the preceding claims, **characterized in that** the RFID chip is encapsulated in the housing (1).

12. RFID transponder according to one of the preceding claims, **characterized in that** the RFID chip is combined with the coupling loop as a unit on a printed circuit board.

13. RFID transponder according to one of the preceding claims, **characterized in that** the housing (1) is closed by means of a cover which is connected to the housing (1) by ultrasonic welding.

## Revendications

1. Transpondeur RFID comportant un boîtier (1), une boucle de couplage disposée dans celui-ci, qui est électriquement connectée à une puce RFID disposée dans le boîtier (1), et une antenne (3) qui est constituée d'une pièce métallique plane, présente une fente (33) et est disposée sur une face extérieure du boîtier (1), dans lequel le boîtier (1) est disposé au moins partiellement sur la fente (33),
**caractérisé en ce que** l'antenne (3) comprend une première partie d'antenne (31) et une deuxième partie d'antenne (32), qui sont séparées l'une de l'autre au moins dans une région de l'antenne (3) par la fente (33), et dans lequel le boîtier (1) est constitué d'une première partie de boîtier (11) et d'une deuxième partie de boîtier (12), dans lequel la deuxième partie de boîtier (12) est au moins partiellement disposée au-dessus de la deuxième partie d'antenne (32) et dans lequel le boîtier (1) est exclusivement fixé par la première partie de, boîtier (11) à la première partie d'antenne (31), et dans lequel le boîtier (1) présente sur la face extérieure dirigée vers l'antenne (3) au moins un gradin (17) de telle sorte que la hauteur (13') de la deuxième partie de boîtier (12) est inférieure d'au moins 0,5 millimètre à la hauteur (13) du premier boîtier (11), de telle sorte qu'entre la deuxième partie d'antenne (32) et la deuxième partie de boîtier (12), il subsiste un espace (35), dans lequel l'espace (35) possède une largeur qui correspond à la différence de hauteur des deux parties de boîtier (11, 12) et qui est par conséquent d'au moins 0,5 mm.

2. Transpondeur RFID selon la revendication 1,
**caractérisé en ce que** la première partie de boîtier (11) comprend au moins une, et de préférence deux pattes de fixation (14, 14') qui contribuent à sa hauteur (13).

3. Transpondeur RFID selon la revendication 2,
**caractérisé en ce que** le boîtier comporte deux gradins (17, 17') dont l'un se trouve respectivement sur un bord d'une patte de fixation (14, 14') respective.

4. Transpondeur RFID selon l'une quelconque des revendications 2 à 3, **caractérisé en ce que** chaque patte de fixation (14, 14') comporte un oeillet de fixation (15, 15').

5. Transpondeur RFID selon l'une quelconque des revendications précédentes, **caractérisé en ce que** la première partie de boîtier (11) est reliée à l'antenne (3) par l'intermédiaire d'au moins un, et de préférence deux moyens de fixation..

6. Transpondeur RFID selon l'une quelconque des revendications précédentes, **caractérisé en ce que** les moyens de fixation sont des vis, des broches d'ajustement, des rivets, des broches extensibles ou des liaisons par encliquetage.

7. Transpondeur RFID selon l'une quelconque des revendications précédentes, **caractérisé en ce que** l'antenne (3) est constituée d'une tôle métallique.

8. Transpondeur RFID selon l'une quelconque des revendications précédentes, **caractérisé en ce que** la fente (33) de l'antenne (3) a une longueur de λ/2, où λ a une valeur comprise entre 31 cm et 35 cm.

9. Transpondeur RFID selon l'une quelconque des revendications précédentes, **caractérisé en ce que** la fente (33) est réalisée de manière incurvée ou fourchue.

10. Transpondeur RFID selon l'une quelconque des revendications précédentes, **caractérisé en ce que** le boîtier (1) est constitué d'un matériau résistant d'un point de vue mécanique, chimique, thermique et aux intempéries, par exemple le Vectra LCP 840i LDS.

11. Transpondeur RFID selon l'une quelconque des revendications précédentes, **caractérisé en ce que** la puce RFID est encapsulée dans le boîtier (1).

12. Transpondeur RFID selon l'une quelconque des revendications précédentes, **caractérisé en ce que** la puce RFID est combinée sous la forme d'une unité en association avec la boucle de couplage sur une carte de circuit imprimé.

13. Transpondeur RFID selon l'une quelconque des revendications précédentes, **caractérisé en ce que** le boîtier (1) est fermé au moyen d'un couvercle qui est relié par soudage aux ultrasons au boîtier (1).
